# EUROPEAN PATENT SPECIFICATION

(11) **EP 4 600 481 B1**
(45) Date of publication and mention of the grant of the patent: **11.03.2026**
(21) Application number: 24216224.6
(22) Date of filing: 28.11.2024
(51) Int. Cl.: F03B 13/00, F03B 3/04

(54) **HYDRAULIC TURBINE**
HYDRAULISCHE TURBINE
TURBINE HYDRAULIQUE

(30) Priority: 08.02.2024 IT 202400002596
(43) Date of publication of application: 13.08.2025
(73) Proprietor: T.I.S. Service S.p.A., 24060 Bolgare (BG) (IT)
(72) Inventor: ROTA, Fortunato, 24060 BOLGARE (BG) (IT)
(74) Representative: Lunati & Mazzoni S.r.L.

(56) References cited:
- WO-A1-2011/019094
- DE-U1- 202019 105 480
- US-A- 2 436 683
- US-A- 716 650

## Description

The present invention relates to a hydraulic turbine of the type specified in the preamble of the first claim.

In particular, the present invention relates to a hydraulic turbine apt to recover energy from the flow of a fluid within a hydraulic network and defining a high fluid-dynamic performance. A similar hydraulic turbine is described in patent application DE 20 2019 105480 U1.

As it is known, in the aqueduct networks there are several pressure reduction points, in line, required so that the water reaches the end user with a controlled flow rate and pressure.

On this regard, in each reduction point a pressure control valve is installed, whose function is substantially to dissipate pressure and, then, the exceeding energy. Such "excess" can be potentially transformed into electric energy which can be exploited directly or transferred to the electricity grid manager.

Currently, these potentials have already been at least partially exploited by installing in these points expensive custom-built generators/hydraulic turbines or pumps which, installed in place of the turbine, have an inverse operation with respect to the conventional operation of the pumps on the market and allow to obtain only very low performances.

Although the solutions providing to adopt a classical turbine in the reduction points allow to obtain higher performances, during determined operating transients, such solutions, as well the solutions with reversible pump, have the great disadvantage of having a considerable impact on hydraulic networks, being able to cause impulsive phenomena, such as the "water hammer", potentially destructive for pipes. In this situation the technical task underlying the present invention is to devise a hydraulic turbine capable of substantially obviating at least part of the mentioned drawbacks.

Within said technical task an important object of the invention is to obtain a hydraulic turbine which is characterized by a high fluid-dynamic performance.

Therefore, another important object of the invention is to implement a hydraulic turbine allowing to recover a great amount of energy from a water network. Moreover, an additional task of the invention is to obtain a hydraulic turbine allowing to work even with counterattack discharge section, without causing rejection of fluid flow in the escape speeds and thus avoiding the formation of water hammers. The technical task and the specified objects are reached by a hydraulic turbine as claimed in the enclosed claim 1.

Preferred technical solutions are highlighted in the depending claims.

The features and the advantages of the invention are explained hereinafter by the detailed description of preferred embodiments of the invention, with reference to the enclosed drawings, wherein:

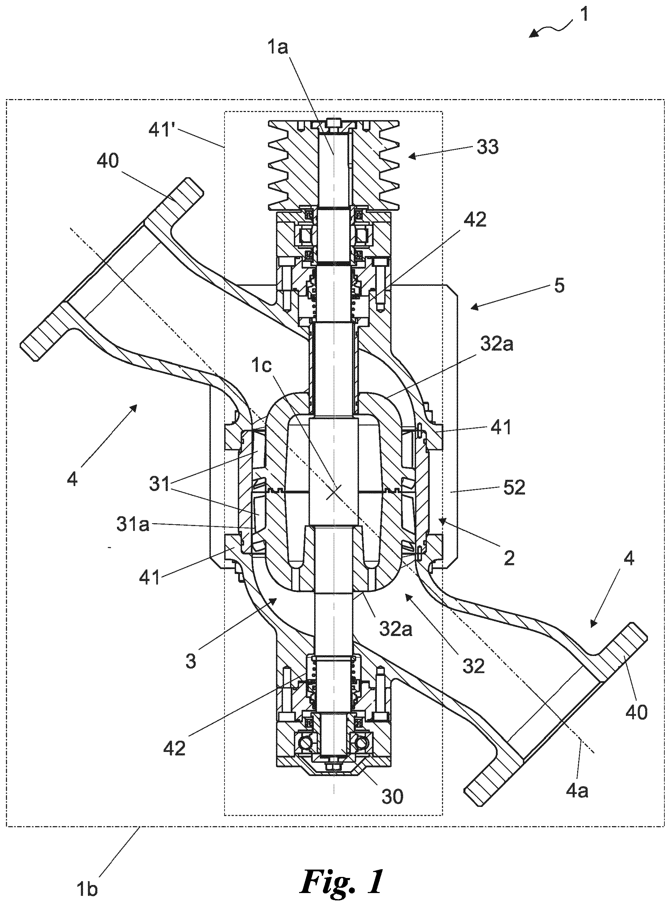

**Figure 1** shows a bottom view in longitudinal section of a hydraulic turbine according to the invention;

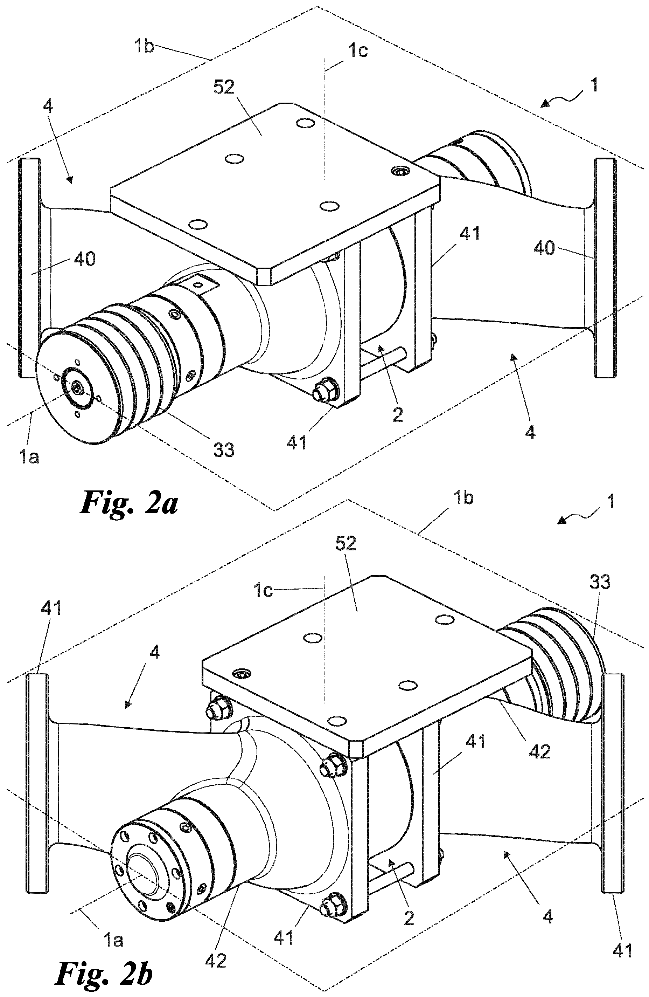

**Figure 2a** illustrates a rear perspective view of a hydraulic turbine according to the invention wherein the alternator is not present and only the support is present;
**Figure 2b** is a front perspective view of the hydraulic turbine of Figure 2;

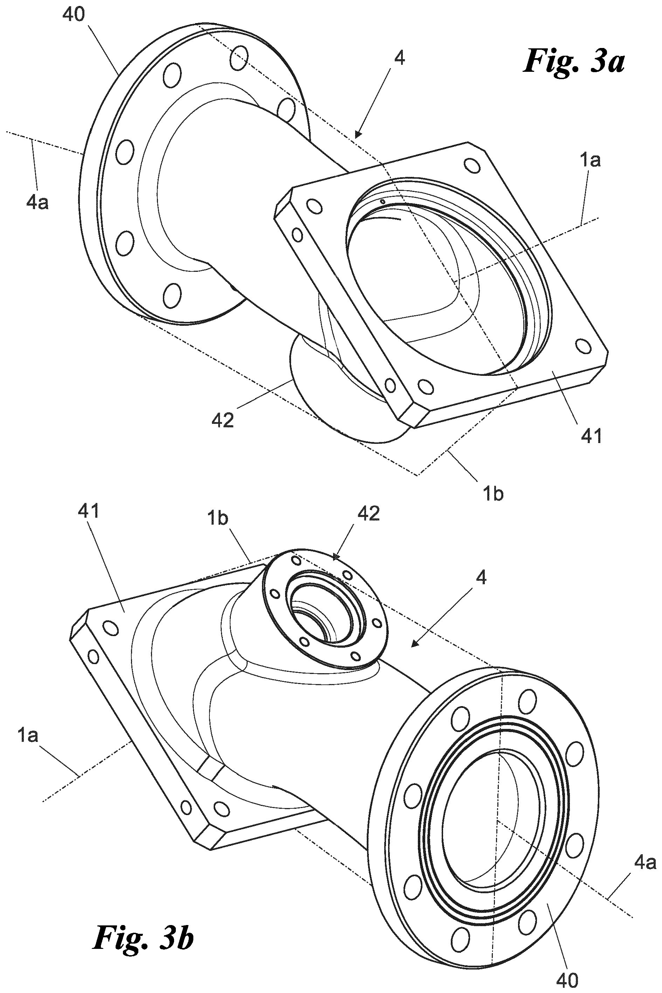

**Figure 3a** represents a front perspective view of a conveyor of a hydraulic turbine according to the invention;
**Figure 3b** shows a front perspective view of the conveyor of Figure 3a;

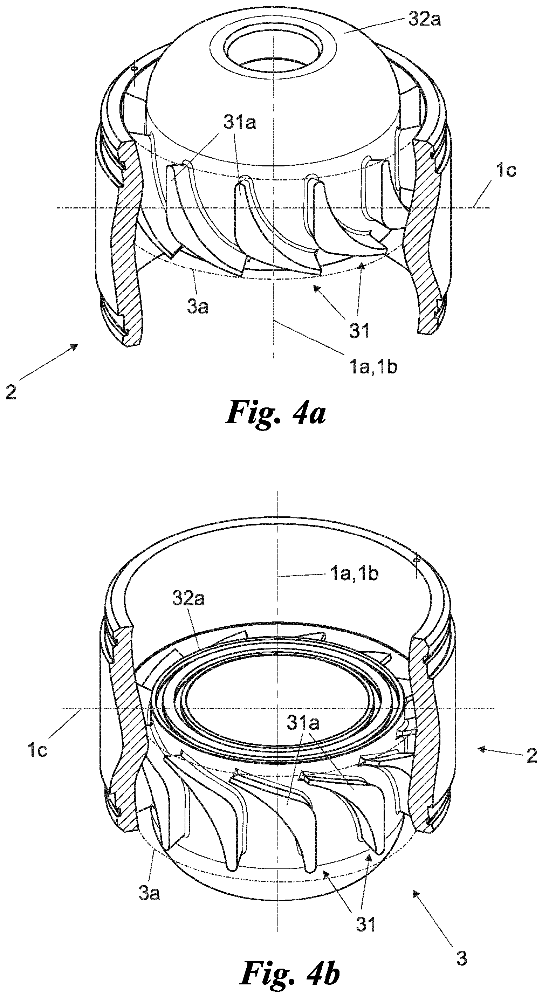

**Figure 4a** illustrates an upper perspective and partially sectioned view of the rotor body (also called helix) of a hydraulic turbine according to the invention wherein only part of the shell is present and the boomerang profiles of the blades are highlighted;
**Figure 4b** ia a lower perspective and partially sectioned view of the rotor body (also called helix) of Figure 4a;

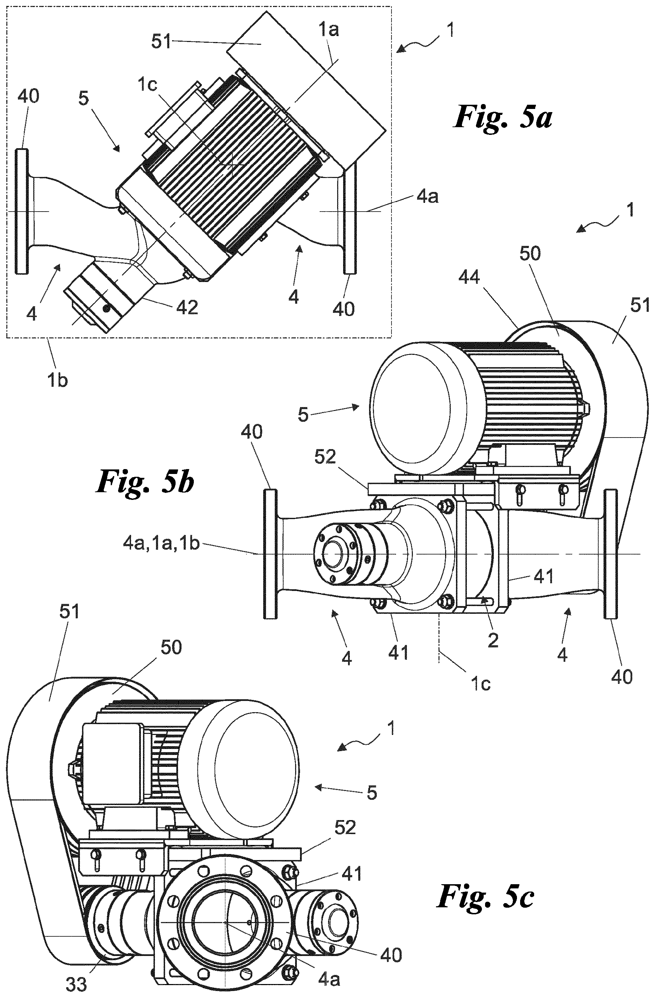

**Figure 5a** represents a top view of a generator providing a hydraulic turbine according to the invention and also the alternator provided with belt;
**Figure 5b** shows a front view of the generator of Figure 5a;
**Figure 5c** illustrates a lateral view of the generator of Figures 5a-5b;

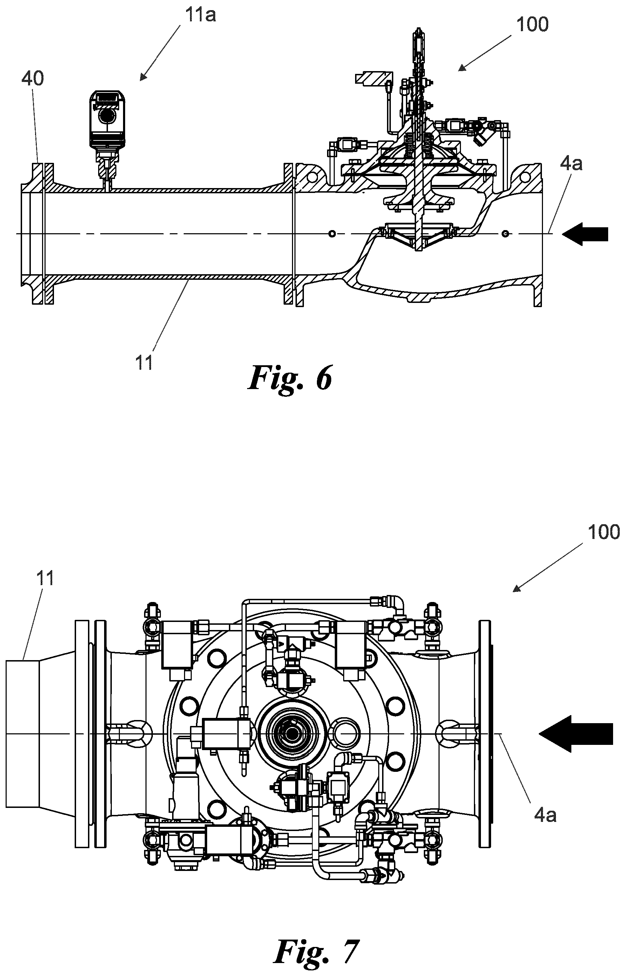

**Figure 6** is a longitudinal view of a collector and an adjusting valve of a station for pressure reduction point of a hydraulic network according to the invention apt to be placed in fluid passage connection with a hydraulic turbine according to the invention;
**Figure 7** represents an upper view of a valve of a station for pressure reduction point of a hydraulic network according to the invention;

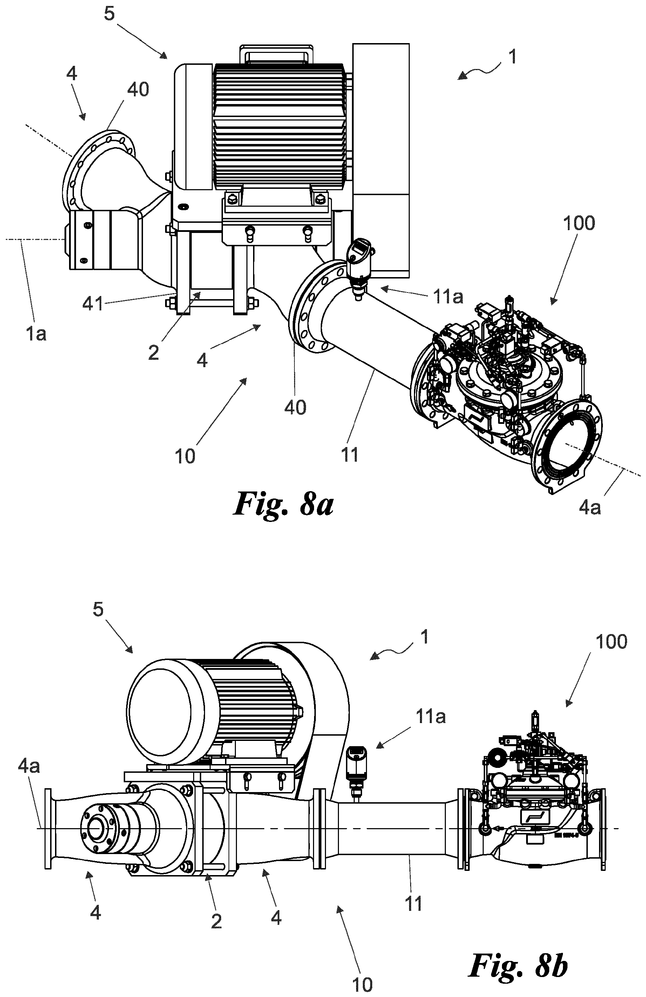

**Figure 8a** shows a perspective view of a station for pressure reduction point of a hydraulic network according to the invention; and
**Figure 8b** shows a longitudinal view of the station for pressure reduction point of a hydraulic network of Figure 8a.

In the present document, the measurements, values, shapes and geometrical references (such as perpendicularity and parallelism), when associated to words such as "about" or other similar terms such as "approximately" or "substantially", are to be meant as excluding measurement errors or inaccuracies due to production and/or manufacturing errors and, above all, excluding a slight deviation from the value, measurement, shape or geometrical reference thereto it is associated. For example, such terms, if associated to a value, preferably designate a deviation not higher than 10% of the value itself.

Moreover, when used, terms such as "first", "second", "higher", "lower", "main" and "secondary" do not identify necessarily an order, a relation priority or relative position, but they can be simply used to distinguish more clearly components different from each other.

Unless otherwise specified, as it results from the following discussions, it is considered that terms such as "treatment", "computer science", "determination", "calculation", or the like, relate to the action and/or processes of a computer or similar electronic calculation device which manipulates and/or transforms data represented as physical data, such as electronic quantities of registers of a computer system and/or memories into other data similarly represented as physical quantities within computer systems, registers or other devices for storing, transmitting or displaying information.

The measurements and data reported in the present text are to be considered, unless otherwise indicated, as performed under International Standard Atmosphere ICAO (ISO 2533:1975).

With reference to the Figures, the hydraulic turbine according to the invention is designated as a whole with number 1.

The hydraulic turbine is apt to react upon the passage of a fluid inside thereof, preferably a liquid fluid.

Then, the turbine 1 defines at least a central axis 1a.

The central axis 1a is the axis along which the fluid flows inside the turbine 1 by interacting therewith. Therefore, it is a virtual axis apt to determine an indicative spatial reference for the turbine 1.

The turbine 1, moreover, defines a longitudinal plane 1a. The longitudinal plane 1b is a virtual plane too. Moreover, the longitudinal plane 1a is the plane on which the central axis 1a lies.

The turbine 1 defines also a transverse axis 1c. The transverse axis 1c is normal to the longitudinal plane 1b. Moreover, the transverse axis 1c is incident the central axis 1a. Then, the transverse axis 1c too is a virtual axis which with the central axis 1a can form, for example, part of a reference third of the turbine 1. Then, both the central axis 1a, and the transverse axis 1c can be central or barycentric axes of the turbine 1.

The turbine 1, then, comprises also a body 2.

The body 2 is substantially annular. Moreover, it is stator in the sense that it is part of turbine 1 apt to remain still.

The body 2 is centred with respect to the central axis 1a.

The body 2 substantially defines a casing, having two accesses at opposite sides, apt to enclose, in detail to surround, the rotor part of the turbine 1.

The turbine 1, in fact, comprises even a helix 3 or rotor.

The helix 3 is arranged at least partially in the body 2. Moreover, the helix 3 is apt to move relatively to the motion of the fluid passing inside the body 2 along the central axis 1a, or however parallelly thereto.

Then, the helix 3 comprises at least a first shaft 30.

The first shaft 30 develops along the central axis 1a. Then, the first shaft 30 is apt to move integrally to the overall rotation of the helix 3 around the central axis 1a.

In particular, the first shaft 30 is the transmission member responsible for transmitting the rotation determined by the fluid on the helix 3 to other apparatuses better described hereinafter.

The helix 3, additionally, comprises also a plurality of blades 31.

The blades 31 are connected to the first shaft 30 suitably in integral way. Then, the blades 31 can be directly constrained to the first shaft 30, or indirectly constrained thereto through an additional element.

For example, in fact, the helix 3 could comprise a shell 32.

If present, the shell 32 is substantially a squat element, or core, preferably constrained to the first shaft 30. Then, the shell 32 is integral to the first shaft 30 and rotates around to the central axis 1a therewith.

Moreover, the shell 32 preferably comprises a plurality of parts 32a.

The parts 32a are substantially portions of shell 32 which, when coupled, form the shell 32. Then, the parts 32a are mutually connected. Moreover, they include, each one, at least a plurality of blades 31.

Each part 32a, then, comprises the blades 31 distributed around a respective part 32a.

The first shaft 30 is constrained to at least two said parts 32a. Preferably the first shaft 30 is constrained to one of the parts 32a at least at ends of the shell 32.

In a preferred, but not exclusive, embodiment of the invention, the first shaft 30 is constrained at least to the end parts 32a of the shell 32. Then, the first shaft 30 passes through each one of the parts 32a.

Of course, as already mentioned, it is not required that the helix 3 includes the shell 32. Therefore, generally, the blades 31 are distributed angularly around and with respect to the central axis 1a. Then, each blade 31 develops radially to the central axis 1a.

Moreover, preferably, one or more blades 31 defines a profile 31a.

The profile 31a is of aerodynamic type. Moreover, the profile 31a is determined in section on a development surface 3a.

The development surface 3a is a virtual surface apt to cut in section the blades 31a. Preferably, the development surface 3a develops around the central axis 1a.

Then, the herein determined profile 31a advantageously has a boomerang shape with an end parallel to the central axis 1a and one transversal to the axis 1a. Preferably, the end transversal to the central axis 1a is placed downstream of the other end parallel to the central axis 1a, with respect to the flow direction of the fluid inside the body 2.

The turbine 1, in addition to what described, also comprises two conveyors 4.

The conveyors 4 are substantially ducts apt to channel or convey fluid in the body 2 or outside the body 2.

Therefore, the conveyors 4 are connected to the body 2 at opposite sides thereof so as to allow the fluid entering a conveyor 4 to pass through the body 2, by interacting with the helix 3, and outgo from the conveyor 4 on the opposite side.

Each one of the conveyors 4, in detail, comprises at least a first flange 40.

The first flange 40 is apt to be constrained to an external hydraulic network by arranging in fluid passage connection to an external hydraulic network the conveyor 4 and then the turbine 1. As it is known, the first flange 40 is preferably a circular, that is annular, element, apt to be constrained with an external duct.

Moreover, the first flange 40 defines an outflow axis 4a.

The outflow axis 4a is preferably detected on the longitudinal plane 1b.

Moreover, the outflow axis 4a is the axis along which, or parallelly to which, the fluid entering through the first flange 40 flows.

Then, the outflow axis 4a is also the axis around which the first flange 40 is centered. Each one of the conveyors 4 also comprises at least a second flange 41. The second flange 41 is centered with respect to the central axis 1a. The second flange 41 too is preferably a circular, that is annular, element, apt to be constrained with an external duct.

Moreover, the second flange 41 puts the conveyor 4 in fluid passage connection with the body 2 at one side thereof.

The two conveyors 4, in detail, are constrained through their own second flanges 41 on the body 2 at opposite sides.

Then, the second flanges 41 close the body 2 therebetween.

Still more in detail, on this regard, one or more of the second flanges 41 is removably constrained to the body 2 at a respective side thereof.

Moreover, the second flanges 41 are mutually constrained integrally so as to tighten and lock the body 2 therebetween. Therefore, the body 2 separates the second flanges 41.

The conveyors 4 preferably define a particular shape.

In fact, advantageously, the first flange 40 is off-center with respect to the central axis 1a.

Moreover, preferably, the first flange 40 is placed externally to a projection 41' of the second flange 41. The projection 41' is nothing but the space delimited by the external perimeter of the second flange 41, defined by the section of the second flange 41 along a plane normal to the central axis 1a and developing parallelly to the central axis 1a.

Then, the projection 41' develops, indeed, parallelly to the central axis 1a.

In this way, the first flange 40 does not interfere in any way with the first shaft 30.

This involves that the space in front of and behind the body 2 along the central axis 1a is not occupied by parts of conveyors 4 and that, then, such parts can be occupied by other parts of the turbine 1, for example transmission components, by making the turbine 1 itself spatially more compact.

Moreover, preferably, the conveyors 4 are arranged axial-symmetrically with respect to the transverse axis 1c.

Therefore, the conveyors 4 are configured so that the respective outflow axes 4a are at least mutually parallel. This feature favours the fluid conveyance and, especially, the insertion of the turbine 1 inside an external hydraulic network.

The length of the conveyors 4 or even of the body 2, can determine a greater or lesser offset between the outflow axes 4a. This involves that the turbine 1 can be easily adapted even to situations in which there are misalignments of the pipes of the same external hydraulic network.

In the preferred embodiment, the outflow axes 4a are mutually aligned by defining one the extension of the other one. Therefore, they are also incident with the transverse axis 1c.

The outflow axis 4a can lie on the longitudinal plane 1b.

Still more in detail, preferably, the outflow axis 4a is tilted by an angle comprised between 30° and 60° with respect to the central axis 1a (suitably on the longitudinal plane 1b), for example tilted by 45°.

One or more among the conveyors 4, additionally, preferably comprises a slot **42.** The slot 42, if present, is centered with respect to the central axis 1a. Then, the first shaft 30 is housed inside one or more slots 42.

The first shaft 30 preferably comprises at least a transmission end **33.** The transmission end 33 is configured to be coupled to a transmission belt **51.**

Therefore, it can simply include a roller provided with peripheral guides apt to keep firmly the connection with the belt 51.

The belt 51 is an element, known on itself, widely known to the person skilled in the art.

The invention, moreover, introduces a generator comprising the turbine 1.

Of course, the generator can also comprise an alternator **5** transforming the mechanical energy outgoing from the turbine 1 into electric energy.

The alternator 5 is a device apt to convert the mechanical energy determined by the motion of the first shaft 30 into electric energy. The alternator 5 too is a device known on itself.

Then, as already anticipated, the first shaft 30 is apt to be operatively connected to the alternator 5. Consequently 1, the first shaft 30 can be effectively operatively connected thereto.

Moreover, more in detail, the alternator 5 comprises a second shaft **50** and the belt 51. The latter is operatively connected to the second shaft 50 and to the transmission end 33 so as to transmit the motion of the helix 3 around the central axis 1a to the alternator 5.

In order to make the generator more compact, the turbine 1 can comprise even a support **52.**

The support 52 is preferably constrained to one or more second flanges 41. Then, the support 52 is configured to support the alternator 5 and the latter then is preferably integral to the support 52.

As already mentioned, the turbine 1 is apt to be placed in fluid passage connection with an external hydraulic network. In particular, the turbine 1 is apt to be used inside a station **10** for pressure reduction point of a hydraulic network.

The station 10 comprises at least a hydraulic turbine, for example the turbine 1 or another any turbine, and a valve **100.** Optionally, the station 10 can comprise the above-mentioned generator.

The valve 100 is in passage connection with the first flange 40. Moreover, the valve 100 is apt to interact with the fluid along the outflow axis 4a.

Advantageously, the valve 100 is a membrane hydro-valve. Then, preferably, the valve 100 is apt to control the fluid pressure and, to this purpose, it is arranged downstream of the turbine 1 with respect to the flowing direction along the outflow axis 4a of the fluid when the station 10 is in use.

This configuration offers the great advantage of keeping high the performance of the turbine downstream of the valve 100.

Moreover, the membrane hydro-valve, which is known on itself, is configured to collect energy in relation to the fluid pressure changes.

Moreover, the station 10 can comprise an additional element.

For example, the station 10 can comprise a manifold 11.

If present, the manifold 11 is placed between the turbine 1 and the valve 100.

Then, the manifold 11 arranges the turbine 1 and the valve 100 in fluid passage connection and, then, it is positioned therebetween.

Moreover, the station 10 preferably comprises a pressure switch **11a.** The pressure switch is a device known on itself, apt to detect the pressure of a fluid. Preferably, the pressure switch 11a is configured to detect the pressure of the fluid in the manifold 11.

Then, the pressure switch 11a is operatively connected to the valve 100. In addition, it is apt to control the valve 100 depending upon the pressure of the fluid when the station 10 is in use.

The turbine 1 according to the invention achieves important advantages.

In fact, the hydraulic turbine is characterized by a high fluid-dynamic performance given by conveying the fluid which, thanks also to the shapes of conveyors 4 and blades 31, does not undergo cavitations or other local pressure variations altering the overall operation of the turbine 1. Such aspect obviously also translates into a high overall performance at the terminals of the generator.

Moreover, the hydraulic turbine 1 allows to work even with counterattack discharge section, without causing rejection of the fluid flow in the escape speeds and thus avoiding the formation of water hammers.

Then, the hydraulic turbine 1 allows to recover a huge amount of energy from a common hydraulic network.

In conclusion, considering its shape, the turbine 1, and/or the generator, can be adapted to any local hydraulic network and can be herein easily integrated also thanks to its own versatility, since it can be connected even to misaligned ducts, and has reduced overall dimensions.

In particular, the structure of the turbine 1, and/or the generator, allows to the same to be easily and quickly assembled or disassembled locally.

The invention may be subject to variants within the scope of the claims. Within such scope, all details can be replaced by equivalent elements and the materials, shapes and sizes can be any.

## Claims

1. A hydraulic turbine (1) defining:
- a central axis (1a),
- a longitudinal plane (1b) on which said central axis (1a) lies, and
- a transverse axis (1c) normal to said longitudinal plane (1b) and incident with said central axis (1a);
and comprising:
- a stator annular body (2) centered with respect to said central axis (1a);
- a helix (3) arranged inside said body (2) and including:
- a first shaft (30) developing along said central axis (1a), and
- a plurality of blades (31) connected to said first shaft (30), distributed around said central axis (1a) and each one developing radially to said central axis (1a);
- two tubular conveyors (4) each one including:
- a first flange (40) apt to be placed in fluid passage connection with an external hydraulic network and defining an outflow axis (4a) on said longitudinal plane (1b) around which said first flange (40) is centered, and
- a second flange (41) centered with respect to said central axis (1a) and in fluid passage connection with said body (2) at a respective side thereof;
and **characterized in that**
- said first flange (40) is off-center with respect to said central axis (1a) and it is placed outside a projection (41') of said second flange (41) parallel to said central axis (1a) so as not to interfere with said first shaft (30), and
- said conveyors (4) are arranged axial-symmetrically with respect to said transverse axis (1c) so that said respective outflow axes (4a) are at least mutually parallel.

2. The turbine (1) according to claim 1, wherein said respective outflow axes (4a) are mutually aligned and incident said transverse axis (1c).

3. The turbine (1) according to any one of the preceding claims, wherein said outflow axis (4a) it tilted by an angle comprised between 30° and 60° with respect to said central axis (1a).

4. The turbine (1) according to any one of the preceding claims, wherein said helix (3) comprises a shell (32) including a plurality of parts (32a) mutually connected and each one including at least a plurality of said blades (31) distributed around a respective said part (32a) and said first shaft (30) is constrained to at least two said parts (32a) at ends of said shell (32).

5. The turbine (1) according to any one of the preceding claims, wherein one or more of said second flanges (41) is removably constrained to said body (2) at one respective said side thereof.

6. The turbine (1) according to any one of the preceding claims, wherein one or more of said blades (31) defines an aerodynamic sectioned profile (31a), on a developing surface (3a) extending around said central axis (1a), having boomerang shape with an end parallel to said central axis (1a).

7. The turbine (1) according to any one of the preceding claims, wherein one or more among said conveyors (4) comprise a slot (42) centered with respect to said central axis (1a) and said first shaft (30) is housed inside one or more of said slots (42) and comprises at least a transmission end (33) configured to be coupled to a transmission belt (51).

8. The turbine (1) according to any one of the preceding claims, wherein said second flanges (41) are mutually constrained integrally so as to lock said body (2) therebetween and said body (2) separates said second flanges (41).

9. A generator comprising a turbine (1) according to any one of the preceding claims and additionally an alternator (5) operatively connected to said first shaft (30) and apt to convert the mechanical energy determined by the motion of said first shaft (30) into electric energy.

10. The generator according to claim 9, wherein said alternator (5) comprises a second shaft (50) and said belt (51) operatively connected to said second shaft (50) and to said transmission end (33) so as to transmit the motion of said helix (3) around said central axis (1a) to said alternator (5).

## Patentansprüche

1. Eine hydraulische Turbine (1), die definiert:
- eine zentrale Achse (1a),
- eine Längsebene (1b), auf der sich die genannte zentrale Achse (1a) erstreckt, und
- eine Querachse (1c), die normal zu der genannten Längsebene (1b) ist und die genannte zentrale Achse (1a) schneidet;
und umfassend:
- einen ringförmigen Stator-Körper (2), der in Bezug auf die genannte zentrale Achse (1a) zentriert ist;
- eine Helix (3), die innerhalb des genannten Körpers (2) angeordnet ist und umfasst:
- eine erste Welle (30), die sich entlang der genannten zentralen Achse (1a) erstreckt, und
- eine Mehrzahl von Schaufeln (31), die mit der genannten ersten Welle (30) verbunden sind, um die genannte zentrale Achse (1a) verteilt sind und sich jeweils radial zu der genannten zentralen Achse (1a) erstrecken;
- zwei rohrförmige Förderer (4), von denen jeder umfasst:
- einen ersten Flansch (40), der dazu geeignet ist, in einer Fluiddurchgangsverbindung mit einem externen hydraulischen Netz angeordnet zu werden und eine Auslassachse (4a) definiert, die sich auf der genannten Längsebene (1b) befindet, um welche der genannte erste Flansch (40) zentriert ist, und
- einen zweiten Flansch (41), der in Bezug auf die genannte zentrale Achse (1a) zentriert ist und in einer Fluiddurchgangsverbindung mit dem genannten Körper (2) an einer jeweiligen Seite desselben steht;
und **dadurch gekennzeichnet, dass**
- der genannte erste Flansch (40) gegenüber der genannten zentralen Achse (1a) exzentrisch angeordnet ist und außerhalb einer Projektion (41') des genannten zweiten Flansches (41), die parallel zu der genannten zentralen Achse (1a) verläuft, angeordnet ist, um nicht mit der genannten ersten Welle (30) zu interferieren, und
- die genannten Förderer (4) axial-symmetrisch in Bezug auf die genannte Querachse (1c) angeordnet sind, so dass ihre jeweiligen Auslassachsen (4a) zumindest zueinander parallel sind.

2. Die Turbine (1) nach Anspruch 1, wobei die jeweiligen Auslassachsen (4a) zueinander ausgerichtet sind und die genannte Querachse (1c) schneiden.

3. Die Turbine (1) nach einem der vorhergehenden Ansprüche, wobei die genannte Auslassachse (4a) um einen Winkel zwischen 30° und 60° gegenüber der genannten zentralen Achse (1a) geneigt ist.

4. Die Turbine (1) nach einem der vorhergehenden Ansprüche, wobei die genannte Helix (3) ein Gehäuse (32) umfasst, das eine Mehrzahl von miteinander verbundenen Teilen (32a) einschließt, wobei jeder dieser Teile zumindest eine Mehrzahl der genannten Schaufeln (31) umfasst, die um einen jeweiligen genannten Teil (32a) verteilt sind, und die genannte erste Welle (30) an zumindest zwei der genannten Teile (32a) an den Enden des genannten Gehäuses (32) befestigt ist.

5. **.** Die Turbine (1) nach einem der vorhergehenden Ansprüche, wobei einer oder mehrere der genannten zweiten Flansche (41) lösbar an dem genannten Körper (2) an einer jeweiligen Seite desselben befestigt sind.

6. **.** Die Turbine (1) nach einem der vorhergehenden Ansprüche, wobei eine oder mehrere der genannten Schaufeln (31) ein aerodynamisches Profil mit Querschnitt (31a) definieren, auf einer Entwicklungsfläche (3a), die sich um die genannte zentrale Achse (1a) erstreckt, wobei das Profil eine Bumerangform mit einem Ende aufweist, das parallel zu der genannten zentralen Achse (1a) verläuft.

7. Die Turbine (1) nach einem der vorhergehenden Ansprüche, wobei einer oder mehrere der genannten Förderer (4) einen Schlitz (42) umfassen, der in Bezug auf die genannte zentrale Achse (1a) zentriert ist, und die genannte erste Welle (30) innerhalb eines oder mehrerer der genannten Schlitze (42) angeordnet ist und zumindest ein Übertragungsende (33) umfasst, das dazu ausgelegt ist, mit einem Übertragungsriemen (51) gekoppelt zu werden.

8. **.** Die Turbine (1) nach einem der vorhergehenden Ansprüche, wobei die genannten zweiten Flansche (41) integral miteinander verbunden sind, um den genannten Körper (2) zwischen sich zu fixieren, und der genannte Körper (2) die genannten zweiten Flansche (41) voneinander trennt.

9. **.** Ein Generator, umfassend eine Turbine (1) nach einem der vorhergehenden Ansprüche sowie zusätzlich einen Alternator (5), der betriebswirksam mit der genannten ersten Welle (30) verbunden ist und dazu geeignet ist, die durch die Bewegung der genannten ersten Welle (30) bestimmte mechanische Energie in elektrische Energie umzuwandeln.

10. **.** Der Generator nach Anspruch 9, wobei der genannte Alternator (5) eine zweite Welle (50) umfasst und der genannte Riemen (51) betriebswirksam mit der genannten zweiten Welle (50) sowie mit dem genannten Übertragungsende (33) verbunden ist, so dass die Bewegung der genannten Helix (3) um die genannte zentrale Achse (1a) auf den genannten Alternator (5) übertragen wird.

## Revendications

1. Une turbine hydraulique (1) définissant :
- un axe central (1a),
- un plan longitudinal (1b) sur lequel s'étend ledit axe central (1a), et
- un axe transversal (1c) normal audit plan longitudinal (1b) et incident audit axe central (1a) ;
et comprenant :
- un corps annulaire de stator (2) centré par rapport audit axe central (1a) ;
- une hélice (3) disposée à l'intérieur dudit corps (2) et comprenant :
- un premier arbre (30) s'étendant le long dudit axe central (1a), et
- une pluralité de pales (31) reliées audit premier arbre (30), réparties autour dudit axe central (1a) et s'étendant chacune radialement par rapport audit axe central (1a) ;
- deux convoyeurs tubulaires (4), chacun comprenant :
- une première bride (40) apte à être mise en connexion de passage de fluide avec un réseau hydraulique externe et définissant un axe de sortie (4a) situé sur ledit plan longitudinal (1b) autour duquel ladite première bride (40) est centrée, et
- une seconde bride (41) centrée par rapport audit axe central (1a) et en connexion de passage de fluide avec ledit corps (2) sur un côté respectif de celui-ci ;
et **caractérisée en ce que**
- ladite première bride (40) est décentrée par rapport audit axe central (1a) et est disposée à l'extérieur d'une projection (41') de ladite seconde bride (41) parallèle audit axe central (1a) de manière à ne pas interférer avec ledit premier arbre (30), et
- lesdits convoyeurs (4) sont disposés de manière axialement symétrique par rapport audit axe transversal (1c) de sorte que leurs axes de sortie respectifs (4a) soient au moins parallèles entre eux.

2. La turbine (1) selon la revendication 1, dans laquelle lesdits axes de sortie respectifs (4a) sont alignés entre eux et incidents audit axe transversal (1c).

3. La turbine (1) selon l'une quelconque des revendications précédentes, dans laquelle ledit axe de sortie (4a) est incliné d'un angle compris entre 30° et 60° par rapport audit axe central (1a).

4. La turbine (1) selon l'une quelconque des revendications précédentes, dans laquelle ladite hélice (3) comprend une enveloppe (32) incluant une pluralité de parties (32a) reliées entre elles et comprenant chacune au moins une pluralité desdites pales (31) réparties autour d'une partie respective (32a), et ledit premier arbre (30) est contraint à au moins deux desdites parties (32a) aux extrémités de ladite enveloppe (32).

5. **.** La turbine (1) selon l'une quelconque des revendications précédentes, dans laquelle une ou plusieurs desdites secondes brides (41) sont fixées de manière amovible audit corps (2) sur un côté respectif de celui-ci.

6. **.** La turbine (1) selon l'une quelconque des revendications précédentes, dans laquelle une ou plusieurs desdites pales (31) définissent un profil à section aérodynamique (31a), sur une surface de développement (3a) s'étendant autour dudit axe central (1a), ayant une forme de boomerang avec une extrémité parallèle audit axe central (1a).

7. La turbine (1) selon l'une quelconque des revendications précédentes, dans laquelle un ou plusieurs desdits convoyeurs (4) comprennent une fente (42) centrée par rapport audit axe central (1a) et ledit premier arbre (30) est logé à l'intérieur d'une ou plusieurs desdites fentes (42) et comprend au moins une extrémité de transmission (33) configurée pour être couplée à une courroie de transmission (51).

8. **.** La turbine (1) selon l'une quelconque des revendications précédentes, dans laquelle lesdites secondes brides (41) sont fixées intégralement entre elles de manière à bloquer ledit corps (2) entre elles et ledit corps (2) sépare lesdites secondes brides (41).

9. **.** Un générateur comprenant une turbine (1) selon l'une quelconque des revendications précédentes et en outre un alternateur (5) relié de manière opérationnelle audit premier arbre (30) et apte à convertir l'énergie mécanique déterminée par le mouvement dudit premier arbre (30) en énergie électrique.

10. **.** Le générateur selon la revendication 9, dans lequel ledit alternateur (5) comprend un second arbre (50) et ladite courroie (51) est reliée de manière opérationnelle audit second arbre (50) et à ladite extrémité de transmission (33) de sorte que le mouvement de ladite hélice (3) autour dudit axe central (1a) soit transmis audit alternateur (5).
